# EUROPÄISCHE PATENTSCHRIFT

(11) **EP 3 536 653 B1**
(45) Veröffentlichungstag und Bekanntmachung des Hinweises auf die Patenterteilung: **22.01.2025**
(21) Anmeldenummer: 19159787.1
(22) Anmeldetag: 27.02.2019
(51) Int. Cl.: B66F 9/075, F15B 1/26, B66F 9/22

(54) **FLURFÖRDERZEUG MIT EINEM HYDRAULIKFLÜSSIGKEITSTANK**
INDUSTRIAL TRUCK WITH A HYDRAULIC FLUID TANK
CHARIOT DE MANUTENTION DOTÉ D'UN RÉSERVOIR DE FLUIDE HYDRAULIQUE

(30) Priorität: 05.03.2018 DE 102018105009
(43) Veröffentlichungstag der Anmeldung: 11.09.2019
(73) Patentinhaber: Jungheinrich Aktiengesellschaft, 22047 Hamburg (DE)
(72) Erfinder: Becker, Marion, 22844 Norderstedt (DE)
(74) Vertreter: Hauck Patentanwaltspartnerschaft mbB

(56) Entgegenhaltungen:
- DE-A1- 102011 004 596
- JP-A- H06 191 297
- JP-A- H11 322 292

## Beschreibung

Die Erfindung betrifft ein Flurförderzeug mit einem Hydraulikflüssigkeitstank. Derartige Tanks nehmen eine Hydraulikflüssigkeit zum Betrieb der hydraulischen Komponenten des Flurförderzeugs auf, insbesondere einer hydraulisch angetriebenen Hubeinrichtung. Der Hydraulikflüssigkeitstank muss eine hohe Sicherheit gegen ein unerwünschtes Austreten der Hydraulikflüssigkeit bieten und, in Anbetracht der im Betrieb des Fahrzeugs auftretenden Beschleunigungen und Erschütterungen, sicher und vor äußeren Einwirkungen geschützt im Flurförderzeug befestigt sein.

Der Hydraulikflüssigkeitstank weist ein erhebliches Volumen auf, das die Hydraulikflüssigkeit aufnimmt und das von einer zumeist relativ dünnen Wandung umschlossen ist. An den Hydraulikflüssigkeitstank angeschlossene Hydraulikleitungen sind gegenüber der Wandung abgedichtet.

Zur Befestigung derartiger Hydraulikflüssigkeitstanks im Flurförderzeug sind zwei unterschiedliche Lösungen bekannt geworden. Bei einer ersten Lösung wird der Hydraulikflüssigkeitstank mit einer Schelle oder einer ähnlichen Halterung an einem Träger des Flurförderzeugs befestigt. Die Schelle oder sonstige Halterung umschließt einen Teil des Hydraulikflüssigkeitstanks und verspannt den Hydraulikflüssigkeitstank mit dem Träger. Dadurch wird der Hydraulikflüssigkeitstank relativ zu dem Träger fixiert, so dass er im Betrieb des Flurförderzeugs nicht verrutschen kann.

Bei einer zweiten Lösung ist der Hydraulikflüssigkeitstank zumindest teilweise von einem hierfür vorgesehenen Aufnahmeraum des Flurförderzeugs umgeben, wobei zwischen den dem Hydraulikflüssigkeitstank zugewandten Innenseiten des Aufnahmeraums und dem Hydraulikflüssigkeitstank Abstandshalter, zum Beispiel in Form von Moosgummiplatten, angeordnet sind. Auf diese Weise wird der Hydraulikflüssigkeitstank in dem Aufnahmeraum gegen ein Verrutschen gesichert.

Aus DE 10 2011 004 596 A1 ist ein Hydrauliktank eines Flurförderzeugs gemäß dem Oberbegriff des Anspruchs 1 bekannt, der sowohl an seiner Unterseite wie auch an seiner Oberseite über Halterungsformationen zur Lagerung und Befestigung des Tanks in einem Flurförderzeug verfügt.

JP H 11 322 292 A beschreibt ein Flurförderzeug mit einem Träger, welcher genau eine Aufnahme zur Aufnahme eines Vorsprungs eines Hydrauliktanks aufweist. Zur Befestigung des Hydrauliktanks sind zudem oberhalb sowie seitlich des Tanks Abstandshalter vorgesehen.

Davon ausgehend ist es die Aufgabe der Erfindung, ein Flurförderzeug zur Verfügung zu stellen, bei dem der Hydraulikflüssigkeitstank auf besonders einfache und dennoch sichere Weise befestigt ist.

Diese Aufgabe wird gelöst durch das Flurförderzeug mit den Merkmalen des Anspruchs 1. Vorteilhafte Ausgestaltungen sind in den Unteransprüchen angegeben.

Das Flurförderzeug hat einen Träger und einen Hydraulikflüssigkeitstank, wobei der Hydraulikflüssigkeitstank mehrere Standfüße und der Träger mehrere Aufnahmen aufweist, in die jeweils einer der Standfüße eingesetzt ist.

Die Standfüße können an der Unterseite des Hydraulikflüssigkeitstanks angeordnet sein. Sie können von einer Bodenfläche des Hydraulikflüssigkeitstanks nach unten vorstehen. Es können mindestens drei Standfüße, aber auch vier oder mehr Standfüße vorhanden sein. Jedem Standfuß kann eine korrespondierend angeordnete Aufnahme des Trägers zugeordnet sein. Die Aufnahmen weisen jeweils einen Freiraum auf, beispielsweise in Form einer Aussparung oder einer Bohrung, die einen der Standfüße bzw. einen Teil davon aufnimmt.

Zum Einbau des Hydraulikflüssigkeitstanks ist es ausreichend, den Hydraulikflüssigkeitstank mit seinen Standfüßen in einem dafür vorgesehenen Freiraum des Flurförderzeugs anzuordnen und die Standfüße in die Aufnahmen einzusetzen. Soll der Hydraulikflüssigkeitstank wieder ausgebaut werden, beispielsweise im Rahmen von Wartungsarbeiten, kann er ganz einfach nach oben entnommen werden, wobei die Standfüße wieder aus den Aufnahmen herausgezogen werden. Es wurde festgestellt, dass allein durch das Zusammenwirken der Standfüße mit den Aufnahmen eine hinreichende Befestigung des Hydraulikflüssigkeitstanks erreicht wird. Der zwischen jedem der Standfüße und der zugehörigen Aufnahme zustandekommende Formschluss verhindert zuverlässig ein Verrutschen des Hydraulikflüssigkeitstanks in seitlicher Richtung. Eine zusätzliche Fixierung des Hydraulikflüssigkeitstanks in vertikaler Richtung hat sich als entbehrlich herausgestellt. Selbst bei stärkerer Beschleunigung oder bei Stößen, wie sie etwa beim Überfahren einer Schwelle auftreten können, verbleibt der Hydraulikflüssigkeitstank in seiner Einbauposition.

Über die besondere Einfachheit der Befestigung in konstruktiver Hinsicht und mit Blick auf den Ein- oder Ausbau hinaus ermöglicht das Zusammenwirken der Standfüße mit den Aufnahmen eine besonders genaue Positionierung des Hydraulikflüssigkeitstanks an der vorgesehenen Einbauposition. Dies trägt dazu bei, dass am Hydraulikflüssigkeitstank ausgebildete oder damit verbundene Elemente, beispielsweise ein Einfüllstutzen für ein Auffüllen des Hydraulikflüssigkeitstanks, relativ zu dem Träger ebenfalls exakt positioniert sind. Dies ist von Vorteil, wenn diese Elemente mit weiteren Bauteilen des Flurförderzeugs zusammenwirken, etwa mit einer für den Einfüllstutzen vorgesehenen Öffnung in einer Abdeckung, deren Position relativ zu dem Träger fest vorgegeben ist. Grund für die verbesserte Positioniergenauigkeit ist, dass die Anordnung des Hydraulikflüssigkeitstanks unabhängig von gesondert zu montierenden Abstandshaltern oder Schellen/Halterungen ist. Anders als bei diesen bekannten Befestigungslösungen kommt es bei der Montage des Hydraulikflüssigkeitstanks auch nicht zu einer Verformung des Hydraulikflüssigkeitstanks, die einer exakten Anordnung beispielsweise eines Einfüllstutzens entgegenwirken kann.

In einer Ausgestaltung besteht der Hydraulikflüssigkeitstank aus Kunststoff und ist in einem Spritzgieß- oder Rotationssinterverfahren hergestellt. Bei einem Rotationssinterverfahren, das auch als Rotationsschmelzverfahren bezeichnet wird, wird ein Kunststoffgranulat in einer Gegenform aufgeschmolzen und die Gegenform wird rotiert, zumeist um unterschiedliche Drehachsen, bis das Kunststoffmaterial nach Abkühlung erstarrt ist. Mit beiden Herstellungsverfahren ist eine kostengünstige Fertigung des Hydraulikflüssigkeitstanks möglich. Insbesondere hinsichtlich der möglichen Formgebung und Wandstärken gibt es jedoch Beschränkungen. Beispielsweise ist es im Rotationssinterverfahren nicht ohne weiteres möglich, Abschnitte der Wandung mit einer vergrößerten Wandstärke herzustellen. Daraus ergeben sich Einschränkungen hinsichtlich der Formstabilität des Hydraulikflüssigkeitstanks, die die Befestigung beispielsweise mit einer Schelle erschweren können. Für die bei der Erfindung vorgesehene Befestigung mithilfe von Standfüßen sind diese Beschränkungen jedoch nicht relevant.

In einer Ausgestaltung sind die Aufnahmen in einer horizontalen Schnittebene vollständig von den Standfüßen ausgefüllt. Dadurch wird ein seitliches Verrutschen des Standfußes relativ zu der Aufnahme in horizontaler Richtung verhindert. Es entsteht eine in der horizontalen Ebene in allen Richtungen wirkende, formschlüssige Verbindung. Insgesamt gelingt eine besonders gute Fixierung des Hydraulikflüssigkeitstanks. Die Aufnahmen und/oder die Standfüße können in der horizontalen Schnittebene grundsätzlich eine beliebige Form aufweisen, beispielsweise quadratisch oder rechteckig. Vorteilhaft ist insbesondere ein kreisförmiger Querschnitt.

In einer Ausgestaltung sind die Aufnahmen und/oder die Standfüße zylindrisch. Insbesondere können sie zum Beispiel kreiszylindrisch sein. Eine konische Ausbildung ist ebenfalls möglich.

Bei der Erfindung stehen die Standfüße von einer Bodenfläche des Hydraulikflüssigkeitstanks nach unten vor, wobei die Bodenfläche überall in einem Abstand von dem Träger angeordnet ist. Wahlweise können auch alle sonstigen Flächen, insbesondere die Seitenflächen, des Hydraulikflüssigkeitstanks einen Abstand zu den benachbarten Komponenten des Flurförderzeugs einhalten. Dadurch werden Beschädigungen im Bereich der genannten Flächen vermieden, die anderenfalls beispielsweise bei Vibrationen auftreten können, wenn eine der Flächen sich zum Beispiel an einer Schweißperle eines benachbart angeordneten Blechs reibt.

In einer Ausgestaltung sind in einer Bodenfläche des Hydraulikflüssigkeitstanks Aussparungen ausgebildet, in die die Standfüße eingesetzt sind. Dadurch können die Standfüße durch einfaches Einsetzen in die Aussparungen besonders einfach an dem Hydraulikflüssigkeitstank befestigt werden. Die Abmessungen der Aussparungen können so auf die Standfüße abgestimmt sein, dass die Standfüße nach dem Einpressen in die Aussparungen sicher fixiert sind. Geeignete Aussparungen, beispielsweise kreiszylindrische Vertiefungen, sind durch entsprechende Formgebung der Wandung des Hydraulikflüssigkeitstanks einfach herstellbar, insbesondere mit den bereits genannten Herstellungsverfahren. Eine Vergrößerung der Wandstärke ist hierfür nicht unbedingt erforderlich.

In einer Ausgestaltung sind in einem Boden des Hydraulikflüssigkeitstanks Gewindeeinsätze angeordnet, mit denen die Standfüße verschraubt sind. Beispielsweise können Gewindeeinsätze aus Metall verwendet werden, die bereits bei der Herstellung des Hydraulikflüssigkeitstanks in dessen Wandung integriert werden. Ebenfalls möglich ist, die Gewindeeinsätze in geeignete Aussparungen einzupressen oder sie darin zu verkleben. Die Standfüße können einteilig mit einem Außengewinde gefertigt oder mit einem gesonderten Gewindebolzen versehen werden, der in den Gewindeeinsatz eingeschraubt wird, um den Standfuß zu befestigen.

In einer Ausgestaltung bestehen die Standfüße aus einem elastischen Material. Das elastische Material erlaubt eine Verformung der Standfüße. Dadurch wird ein einfaches Einsetzen des Hydraulikflüssigkeitstanks mit sämtlichen Standfüßen in die korrespondierenden Aufnahmen auch bei Fertigungstoleranzen möglich. Außerdem kann bei entsprechender Einpassung der Standfüße in die Aufnahmen ein zusätzlicher Kraftschluss erzielt werden. Schließlich erlaubt eine hinreichende Elastizität der Standfüße eine Schwingungsisolation des Hydraulikflüssigkeitstanks. Ein besonders geeignetes, elastisches Material für die Standfüße ist Nitrilkautschuk, auch bezeichnet als NBR für *nitrile butadiene rubber* (Acrylnitril-Butadien-Kautschuk).

In einer Ausgestaltung sind die Standfüße einteilig mit dem Hydraulikflüssigkeitstank hergestellt. Sie bestehen in diesem Fall also aus demselben Material wie der Hydraulikflüssigkeitstank, insbesondere aus einem Kunststoffmaterial. Beispielsweise können bei der Herstellung des Hydraulikflüssigkeitstanks in einem der bereits erläuterten Verfahren ohne weiteres entsprechende Standfüße angeformt werden.

In einer Ausgestaltung ist an einer Unterseite des Hydraulikflüssigkeitstanks eine nach unten weisende Ausbuchtung mit einem Ablaufschlauch angeordnet, wobei die Ausbuchtung in seitlicher Richtung zwischen den Standfüßen und unterhalb einer Ebene angeordnet ist, in der sich die Standfüße befinden. Dadurch ergibt sich ein sicherer Stand des Hydraulikflüssigkeitstanks mit einer optimal positionierten Entnahmestelle an einem tiefstgelegenen Punkt etwa in einer Mitte des Hydraulikflüssigkeitstanks. Der Zugang zu der Entnahmestelle wird insbesondere nicht durch den Träger eingeschränkt.

In einer Ausgestaltung ist der Träger Teil eines Fahrzeuggrundrahmens. Grundsätzlich kann der Träger eine beliebige Tragstruktur für die Befestigung des Hydraulikflüssigkeitstanks sein, beispielsweise ein Zwischenboden oder ein mit dem Fahrzeuggrundrahmen verschraubter oder verschweißter Profilträger. Der Träger kann auch von mehreren Elementen gebildet sein, die miteinander verbunden und/oder an einer sonstigen Tragstruktur des Flurförderzeugs befestigt sind. Ein besonders einfacher Aufbau ergibt sich, wenn der Träger Teil eines Fahrzeuggrundrahmens ist, also kein gesonderter Träger für den Hydraulikflüssigkeitstank erforderlich ist. Insbesondere kann es sich bei dem Träger um eine Fahrzeuggrundrahmenkomponente aus Gusseisen handeln.

Nachfolgend wird die Erfindung anhand von Figuren näher erläutert. Es zeigen:
- Fig. 1: ein Flurförderzeug in einer perspektivischen Ansicht,
- Fig. 2: einen Träger des Flurförderzeugs aus Figur 1 mit eingebautem Hydraulikflüssigkeitstank in einer perspektivischen Ansicht,
- Fig. 3: den Träger aus Figur 2 in einer anderen perspektivischen Ansicht,
- Fig. 4: eine perspektivische Ansicht eines unteren Teils des Hydraulikflüssigkeitstanks aus Figur 2,
- Fig. 5: den Hydraulikflüssigkeitstank aus Figur 2 in einer Schnittdarstellung.

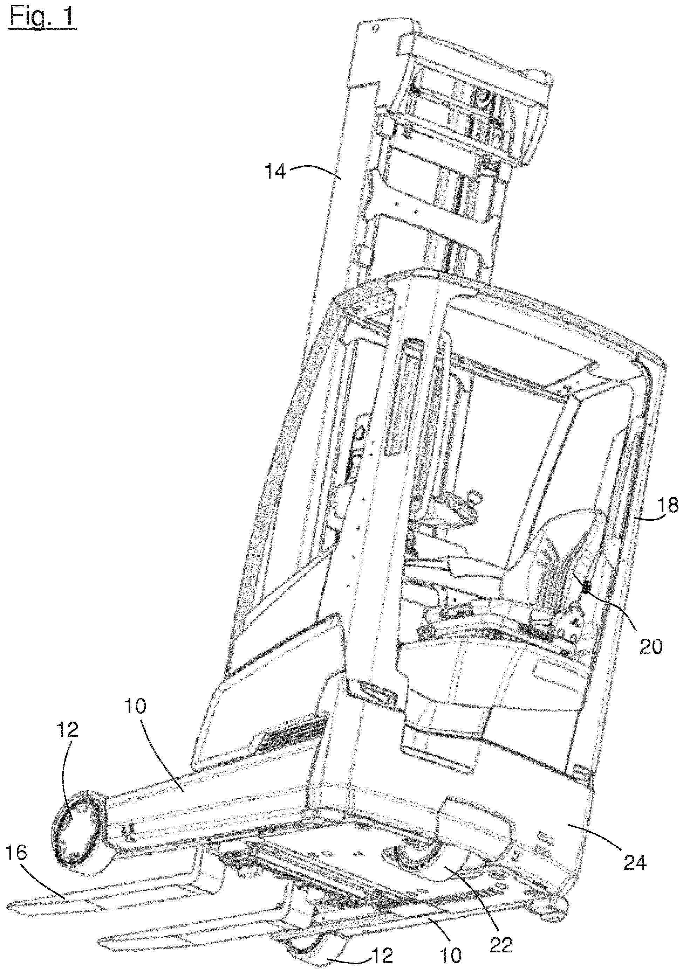

Das Flurförderzeug aus Fig. 1 ist ein Schubmaststapler mit zwei Radarmen 10, an deren vorderen Enden jeweils ein Lastrad 12 angeordnet ist. Zwischen den beiden Radarmen 10 befindet sich ein verschieblich angeordnetes Hubgerüst 14 mit einer Lastgabel 16. Außerdem hat der Schubmaststapler eine Fahrerkabine 18, in der Fahrersitz 20 angeordnet ist. An der Unterseite des Schubmaststaplers erkennt man ein lenkbares Antriebsrad 22. Der Fahrzeuggrundrahmen des Schubmaststaplers umfasst einen Träger 24, der aus Gusseisen hergestellt ist und zugleich ein Gegengewicht bildet. Der in Fig 1 verdeckte Hydraulikflüssigkeitstank 26 ist etwa unterhalb des Fahrersitzes 20 angeordnet.

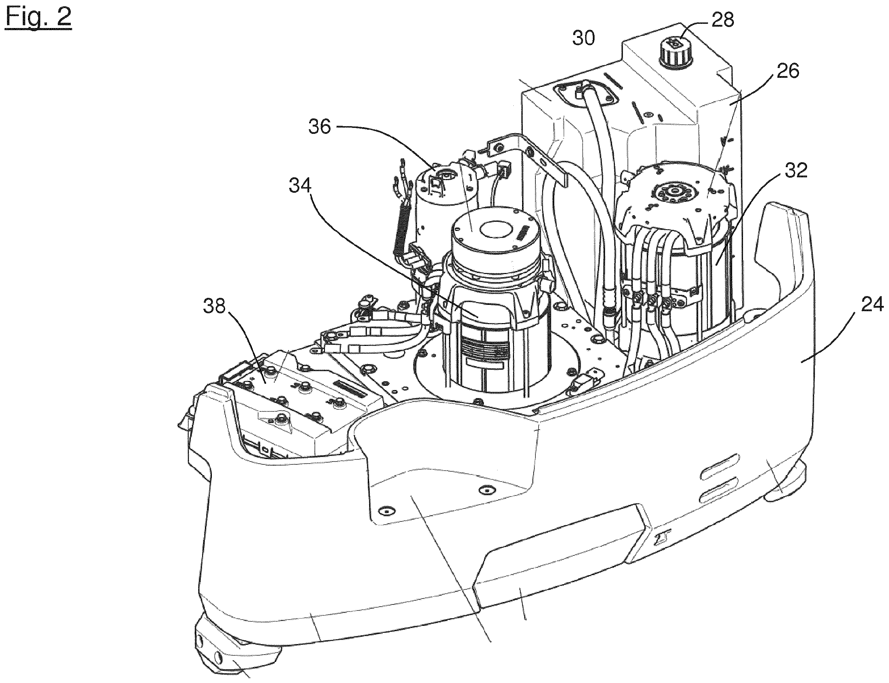

Die Anordnung des Hydraulikflüssigkeitstanks 26 an dem Träger 24 ist in Figur 2 gezeigt. Der Hydraulikflüssigkeitstank 26 weist an seiner Oberseite eine Befüllöffnung mit einem Schraubverschluss 28 auf. Ebenfalls an der Oberseite des Hydraulikflüssigkeitstanks 26 mündet eine Rückführleitung 30 in den Hydraulikflüssigkeitstank 26.

Weitere Komponenten des Schubmaststaplers sind ebenfalls an dem Träger 24 befestigt. Hierzu zählen ein Hydraulikmotor 32, ein Fahrantriebsmotor 34 und ein Lenkmotor 36. Bei allen drei Motoren handelt es sich um Elektromotoren. Weiterhin ist in Figur 2 eine elektronische Steuerung 38 des Schubmaststaplers erkennbar, die ebenfalls an dem Träger 24 befestigt ist.

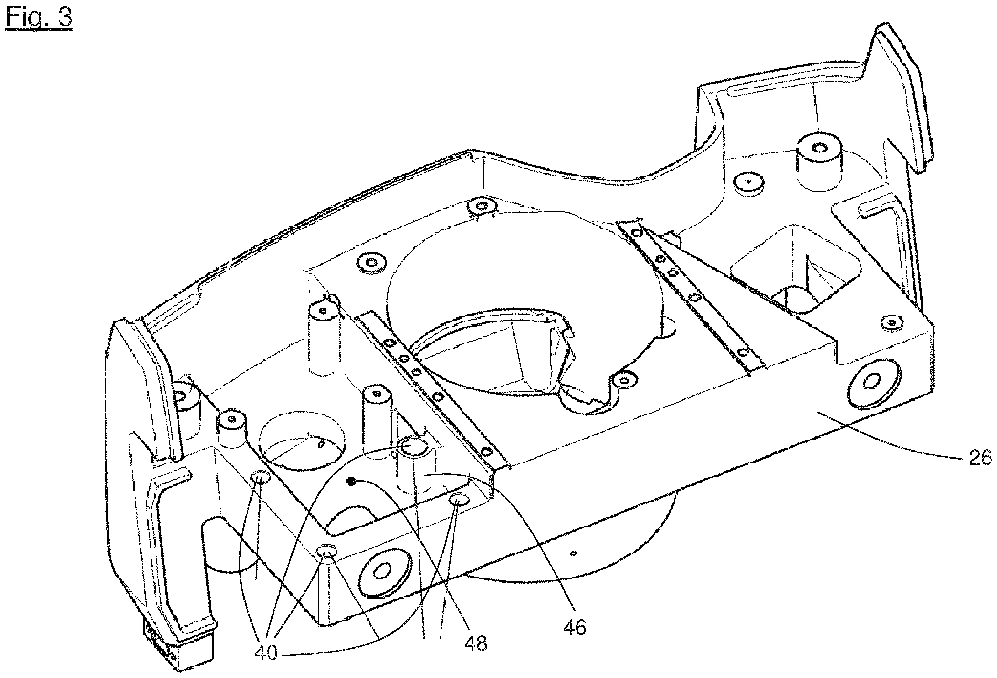

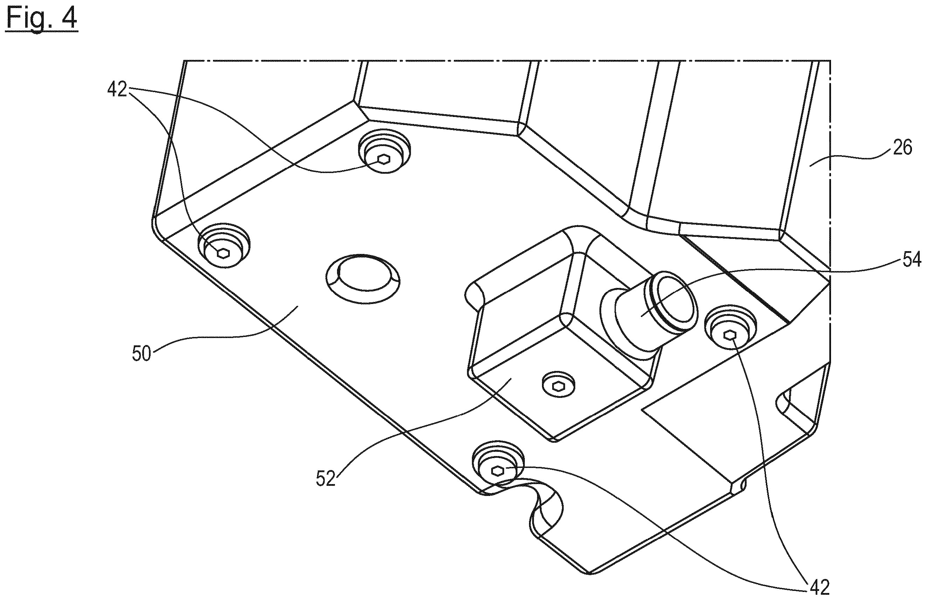

In Figur 3 ist der Träger 24 ohne die daran befestigten Komponenten dargestellt. Man erkennt dort vier an dem Träger ausgebildete Aufnahmen 40, in die die Stützfüße 42 (siehe Figur 4) des Hydraulikflüssigkeitstanks 26 eingesetzt werden. Im Beispiel handelt es sich bei den Aufnahmen 40 und kreiszylindrische Vertiefungen, die bei der Herstellung des Trägers 24 im Gießverfahren hergestellt worden sind. Alternativ können entsprechende Aufnahmen 40 auch zum Beispiel durch Fräsen oder Bohren eingebracht werden. Die vier Aufnahmen 40 liegen in einer horizontal angeordneten Ebene. Drei der Aufnahmen 40 sind in einem an einem äußeren Rand des Trägers 24 umlaufenden Steg 44 ausgebildet, eine vierte der Aufnahmen 40 befindet sich in einem Abstand von dem Steg 44 an einer gesonderten Ausbuchtung 46 des Trägers 24. Zwischen den vier Aufnahmen 40 und unterhalb der Ebene, in der die Aufnahmen 40 angeordnet sind, befindet sich ein Freiraum 48.

Figur 4 zeigt einen unteren Teil des Hydraulikflüssigkeitstanks 26 in einer perspektivischen Ansicht. An der Unterseite des Hydraulikflüssigkeitstanks 26 ist eine Bodenfläche 50 ausgebildet, aus der die vier Standfüße 42 nach unten hervorstehen. Die Standfüße 42 sind kreiszylindrisch und bestehen aus Nitrilkautschuk.

Zwischen den Standfüßen 42 weist der Hydraulikflüssigkeitstank 26 an seiner Unterseite eine nach unten weisende, kastenförmige Ausbuchtung 52 mit einem Stutzen 54 zur Befestigung eines Ablaufschlauchs auf. Diese Ausbuchtung 52 mit Stutzen 54 und daran angeschlossenem Ablaufschlauch findet Platz in dem Freiraum 46 (siehe Figur 3). Die Standfüße 42 sind so bemessen, dass sie die Aufnahmen 40 im Wesentlichen vollständig ausfüllen, wenn sie in diese eingesetzt sind.

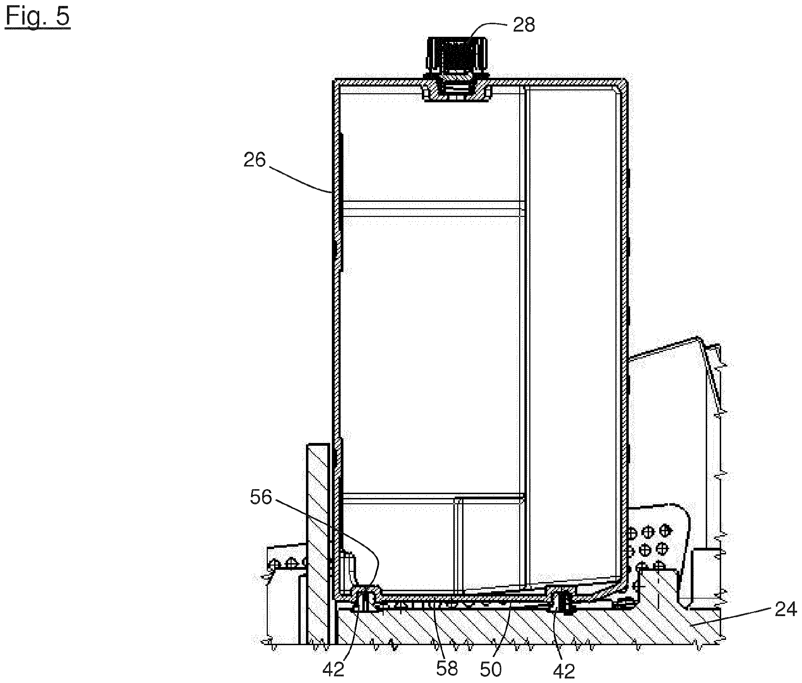

Figur 5 zeigt den Hydraulikflüssigkeitstank 26 in einer vertikalen Schnittebene, die durch den Schraubverschluss 28 und zwei der Standfüße 42 verläuft. Man erkennt außerdem den Träger 24 mit zwei der Aufnahmen 40, in die jeweils einer der Standfüße 42 eingesetzt ist. Ebenfalls gut in Fig. 5 erkennbar ist, dass die Bodenfläche 50 ebenso wie seitliche Flächen des Hydraulikflüssigkeitstanks 26 einen Abstand von den benachbarten Elementen des Flurförderzeugs, insbesondere von dem Träger 24, einhalten.

Die Standfüße 42 sind außerdem in Aussparungen 56 in einem Boden 58 des Hydraulikflüssigkeitstanks 26 eingesetzt und auf diese Weise an dem Hydraulikflüssigkeitstank 26 befestigt. Die Wandung des Hydraulikflüssigkeitstanks 26 weist eine im Wesentlichen gleichmäßige Stärke auf.

### Liste der Bezugszeichen:

- 10: Radarm
- 12: Lastrad
- 14: Hubgerüst
- 16: Lastgabel
- 18: Fahrerkabine
- 20: Fahrersitz
- 22: Antriebsrad
- 24: Träger
- 26: Hydraulikflüssigkeitstank
- 28: Schraubverschluss
- 30: Rückführleitung
- 32: Hydraulikmotor
- 34: Fahrantriebsmotor
- 36: Lenkmotor
- 38: elektronische Steuerung
- 40: Aufnahme
- 42: Standfuß
- 44: Steg
- 26: Ausbuchtung
- 48: Freiraum
- 50: Bodenfläche
- 52: Ausbuchtung
- 54: Stutzen
- 56: Aussparung
- 58: Boden

## Patentansprüche

1. Flurförderzeug mit einem Träger (24) und einem Hydraulikflüssigkeitstank (26), wobei der Hydraulikflüssigkeitstank (26) mehrere Standfüße (42) aufweist, **dadurch gekennzeichnet, dass** der Träger (24) mehrere Aufnahmen (40) aufweist, in die jeweils einer der Standfüße (42) eingesetzt ist, wobei die Standfüße (42) von einer Bodenfläche (50) des Hydraulikflüssigkeitstanks (26) nach unten vorstehen, die Bodenfläche (50) überall in einem Abstand von dem Träger (24) angeordnet ist und zwischen jedem der Standfüße (42) und der zugehörigen Aufnahme (40) ein Formschluss besteht.

2. Flurförderzeug nach Anspruch 1, **dadurch gekennzeichnet, dass** der Hydraulikflüssigkeitstank (26) aus Kunststoff besteht und in einem Spritzgieß- oder Rotationssinterverfahren hergestellt ist.

3. Flurförderzeug nach Anspruch 1 oder 2, **dadurch gekennzeichnet, dass** die Aufnahmen (40) in einer horizontalen Schnittebene vollständig von den Standfüßen (42) ausgefüllt sind.

4. Flurförderzeug nach einem der Ansprüche 1 bis 3, **dadurch gekennzeichnet, dass** die Aufnahmen (40) und/oder die Standfüße (42) zylindrisch sind.

5. Flurförderzeug nach einem der Ansprüche 1 bis 4, **dadurch gekennzeichnet, dass** in einer Bodenfläche (50) des Hydraulikflüssigkeitstanks (26) Aussparungen (56) ausgebildet sind, in die die Standfüße (42) eingesetzt sind.

6. Flurförderzeug nach einem der Ansprüche 1 bis 5, **dadurch gekennzeichnet, dass** in einem Boden (58) des Hydraulikflüssigkeitstanks (26) Gewindeeinsätze angeordnet sind, mit denen die Standfüße (42) verschraubt sind.

7. Flurförderzeug nach einem der Ansprüche 1 bis 6, **dadurch gekennzeichnet, dass** die Standfüße (42) aus einem elastischen Material bestehen.

8. Flurförderzeug nach einem der Ansprüche 1 bis 4, **dadurch gekennzeichnet, dass** die Standfüße (42) einteilig mit dem Hydraulikflüssigkeitstank (26) hergestellt sind.

9. Flurförderzeug nach einem der Ansprüche 1 bis 8, **dadurch gekennzeichnet, dass** an einer Unterseite des Hydraulikflüssigkeitstanks (26) eine nach unten weisende Ausbuchtung (52) mit einem Ablaufschlauch angeordnet ist, wobei die Ausbuchtung (52) in seitlicher Richtung zwischen den Standfüßen (42) und unterhalb einer Ebene angeordnet ist, in der sich die Standfüße (42) befinden.

10. Flurförderzeug nach einem der Ansprüche 1 bis 9, **dadurch gekennzeichnet, dass** der Träger (24) Teil eines Fahrzeuggrundrahmens ist.

## Claims

1. An industrial truck having a base (24) and a hydraulic fluid tank (26), wherein the hydraulic fluid tank (26) comprises multiple feet (42), **characterized in that** the base (24) comprises multiple receiving portions (40) into each of which one of the feet (42) is inserted, wherein the feet (42) protrude downwards from a bottom surface (50) of the hydraulic fluid tank (26), the bottom surface (50) is arranged at all points at a distance from the base (24), and there is a form fit between each of the feet (42) and the associated receiving portion (40).

2. The industrial truck according to claim 1, **characterized in that** the hydraulic fluid tank (26) consists of plastics material and is produced in an injection molding or rotational sintering process.

3. The industrial truck according to claim 1 or 2, **characterized in that** the receiving portions (40) are completely filled by the feet (42) in a horizontal sectional plane.

4. The industrial truck according to one of claims 1 to 3, **characterized in that** the receiving portions (40) and/or the feet (42) are cylindrical.

5. The industrial truck according to one of claims 1 to 4, **characterized in that** recesses (56) into which the feet (42) are inserted are formed in a bottom surface (50) of the hydraulic fluid tank (26).

6. The industrial truck according to one of claims 1 to 5, **characterized in that** threaded inserts by means of which the feet (42) are screwed down are arranged in a bottom (58) of the hydraulic fluid tank (26).

7. The industrial truck according to one of claims 1 to 6, **characterized in that** the feet (42) consist of a resilient material.

8. The industrial truck according to one of claims 1 to 4, **characterized in that** the feet (42) are produced integrally with the hydraulic fluid tank (26).

9. The industrial truck according to one of claims 1 to 8, **characterized in that** a downward-pointing bulge (52) having a drainage hose is arranged on an underside of the hydraulic fluid tank (26), wherein the bulge (52) is arranged, in a lateral direction, between the feet (42) and below a plane in which the feet (42) are located.

10. The industrial truck according to one of claims 1 to 9, **characterized in that** the base (24) is part of a vehicle chassis.

## Revendications

1. Chariot de manutention doté d'un support (24) et d'un réservoir de fluide hydraulique (26), dans lequel le réservoir de fluide hydraulique (26) présente plusieurs pieds d'appui (42), **caractérisé en ce que** le support (24) présente plusieurs logements (40), dans lesquels est inséré respectivement l'un des pieds d'appui (42), dans lequel les pieds d'appui (42) font saillie vers le bas à partir d'une surface de fond (50) du réservoir de fluide hydraulique (26), la surface de fond (50) est disposée partout à une distance du support (24) et un engagement positif est formé entre chacun des pieds d'appui (42) et le logement (40) correspondant.

2. Chariot de manutention selon la revendication 1, **caractérisé en ce que** le réservoir de fluide hydraulique (26) est constitué de plastique et fabriqué à l'aide d'un procédé de moulage par injection ou de roto-moulage.

3. Chariot de manutention selon la revendication 1 ou 2, **caractérisé en ce que** les logements (40) sont entièrement occupés par les pieds d'appui (42) dans un plan de coupe horizontal.

4. Chariot de manutention selon l'une des revendications 1 à 3, **caractérisé en ce que** les logements (40) et/ou les pieds d'appui (42) sont cylindriques.

5. Chariot de manutention selon l'une des revendications 1 à 4, **caractérisé en ce que** des évidements (56) dans lesquels sont insérés les pieds d'appui (42) sont formés dans une surface de fond (50) du réservoir de fluide hydraulique (26).

6. Chariot de manutention selon l'une des revendications 1 à 5, **caractérisé en ce que** des inserts filetés avec lesquels sont vissés les pieds d'appui (42) sont disposés dans un fond (58) du réservoir de fluide hydraulique (26).

7. Chariot de manutention selon l'une des revendications 1 à 6, **caractérisé en ce que** les pieds d'appui (42) sont constitués d'un matériau élastique.

8. Chariot de manutention selon l'une des revendications 1 à 4, **caractérisé en ce que** les pieds d'appui (42) sont fabriqués en une seule pièce avec le réservoir de fluide hydraulique (26).

9. Chariot de manutention selon l'une des revendications 1 à 8, **caractérisé en ce qu'**une partie en creux (52) tournée vers le bas dotée d'un tube d'évacuation est disposée sur un côté inférieur du réservoir de fluide hydraulique (26), dans lequel la partie en creux (52) est disposée entre les pieds d'appui (42) dans le sens latéral et sous un plan dans lequel se trouvent les pieds d'appui (42).

10. Chariot de manutention selon l'une des revendications 1 à 9, **caractérisé en ce que** le support (24) fait partie d'un châssis de base de véhicule.
